# EUROPEAN PATENT SPECIFICATION

(11) **EP 1 381 283 B1**
(45) Date of publication and mention of the grant of the patent: **27.09.2006**
(21) Application number: 01936240.9
(22) Date of filing: 13.04.2001
(51) Int. Cl.: A23G 3/28

(54) **METHOD AND APPARATUS FOR MAKING LACED APPEARING CONFECTIONERIES**
VERFAHREN UND VORRICHTUNG ZUR HERSTELLUNG VON KONFEKTPRODUKTEN MIT SPITZENPROFIL
PROCEDE ET APPAREIL PERMETTANT DE FABRIQUER DES CONFISERIES A L'ASPECT ENTRELACE

(43) Date of publication of application: 21.01.2004
(73) Proprietor: SOCIETE DES PRODUITS NESTLE S.A., 1800 Vevey (CH)
(72) Inventor: BUSSE, Kurt, St. Joseph, MO 64506 (US); GRAY, Michael Peter, Dunnington, York YO19 5PQ (GB)
(74) Representative: Archambault, Jean
(86) International application number: PCT/EP2001/004314
(87) International publication number: WO 2002/082918

(56) References cited:
- EP-A- 0 160 477
- WO-A-00/13524
- DE-C- 19 618 482
- GB-A- 2 166 670
- US-A- 2 754 226
- US-A- 3 824 950
- US-A- 3 903 715
- US-A- 4 743 456
- US-A- 5 951 766
- US-A- 6 138 925

## Description

### BACKGROUND OF THE INVENTION

It has not been possible heretofore to produce chocolate coatings having a laced appearance formed from two layers of chocolate, principally because there is only a very short time period within which the second layer must be applied to the first layer in order to achieve satisfactory adherence. The chocolate layers are usually applied in liquid, semi-liquid, or paste form either by spraying, pouring, dipping, or pressing in a cold environment. Generally, this procedure results in the first layer glazing over to form a frost of condensation shortly after application thereof (less than 30 seconds), which prevents the second liquid layer from adhering properly.

Several references disclose different types of chocolate or other edible coatings having the adherence problems discussed above. For example, U.S. Patent No. 1,777,896 discloses an edible container shaped like a log made by spreading a plastic edible coating on the outside of a cylinder, adding bonbons to simulate branch stubs, and covering with a second layer of chocolate in a semi-liquid or plastic state.

U.S. Patent No. 1,865,097 discloses hollow candy bodies made of chocolate having areas of the body formed with a color contrasting with the color of a major portion of the body. The hollow candy body may be prepared by chilling a dark chocolate in a portion of a mold, closing the mold and filling the mold with a light color chocolate, and chilling the mold again to form the light chocolate body overlaid by dark chocolate patches.

U.S. Patent No. 2,288,970 discloses a confectionery such as ice cream having a coating of chocolate or other edible composition. In particular, the coating is provided with line formations or perforations that are pressed into the coating to control and limit the separation of coating from the confectionery product.

U.S. Patent No. 2,457,110 discloses a method of coating chocolate edibles by dip-coating the chocolate edible in a coating of sufficiently low viscosity without the addition of cocoa butter. The chocolate is disclosed to be non-flowing at high temperatures due to the lack of cocoa butter in the composition during the dipping.

U.S. Patent No. 3,971,853 discloses a frozen confection having a plurality of ingredients of individual colors, as well as a gravity feed arrangement for feeding a plurality of nozzles with the individually-colored ingredients so as to facilitate greater distribution of the ingredients.

U.S. Patent No. 4,189,502 discloses marshmallow and other variegates having the ability to maintain a clear and distinct line of demarcation or delineation with a frozen dessert matrix into which the variegate is incorporated.

U.S. Patent No. 4,369,200 discloses a method for producing three-dimensional decorations of a fatty confectionery material on a base confectionery, such as with a nozzle attached to a compressible bag for depositing the decorations. The deposition preferably occurs from a rotary sprayer, which deposits the decoration by use of a plurality of recesses in a mold.

U.S. Patent No. 4,587,128 discloses a method of making an iced piece of cake and providing good adhesion between the icing coating and the cake by adding a bonding layer to a cake, applying the icing, completely enrobing it with a chocolate layer, cooling and solidifying the chocolate layer, and subsequently decorating the top and sides by pressing thereon "squiggles" having a different color.

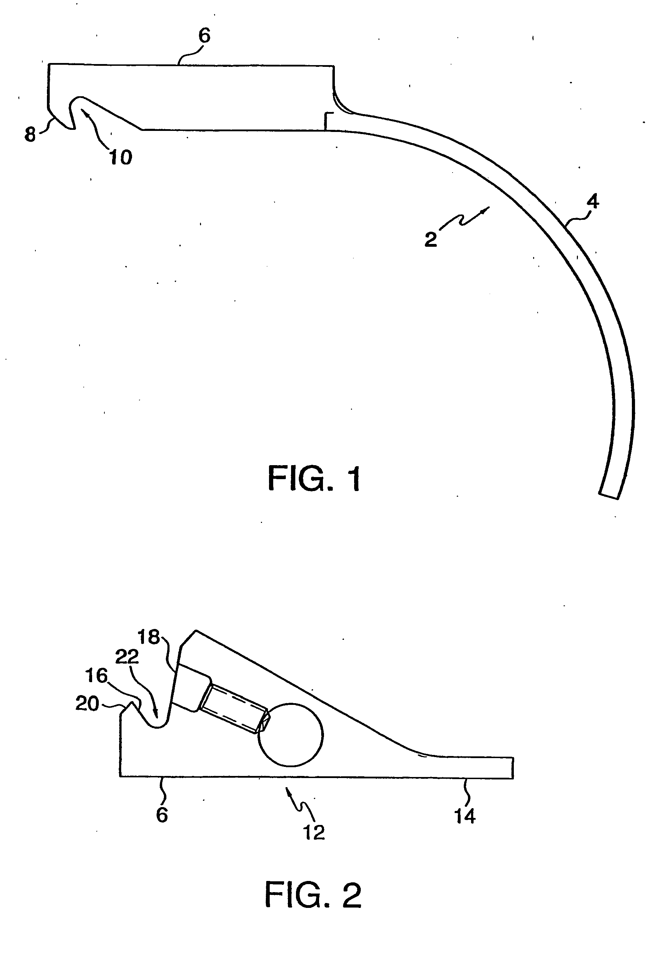

US 4743456 is concerned with an apparatus and method for applying a uniform coating to a food product. In the citation the objective is to uniformly coat pieces of food on a conveyor with a high viscosity coating containing large size particulates (Col. 2, lines 31-36). The adjustable shroud segments in the housing as depicted in Fig.2 serve to prevent coating spray from spraying upwardly (Col. 3, line 65 to Co. 4, line 4); Here the purpose of the shields is to direct the decorative stripes of coating material simultaneously on both sides of a suspended stick bar and only on that bar while it is travelling and this within a limited time of less than 30 s., and this while preventing coating material from one applicator to spray onto a second applicator.

WO 00113524 is concerned with product and methods for applying a decorative patterned coating on food articles, particularly stick bars using rotary applicators supplied with liquid coating material.

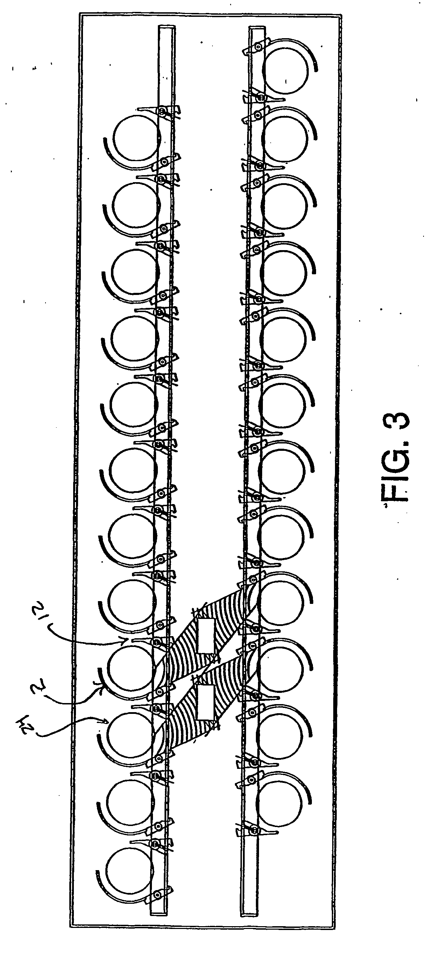

There is no teaching or suggestion of using shields for directing the flow of coating stripes on both sides of a travelling suspended food product while in the same time preventing that the coating material from one aplicator to spray onto a second applicator, which would contaminate and adjacent applicator and possibly also contaminate the design as it is shown in Fig. 3.

In summary, the prior art teaches methods of applying coatings using rotary applicators which either spray uniform coating layers allover a product which is moved horizontally or apply sprays onto a restricted surface of a product placed horizontally. There is no suggestion of how to decorate with stripes a suspended moving product simultaneously on both faces with stripes of coating in a limited time with several rotary applicators and in the same time preventing contamination of spray from one applicator to another.

We have now devised an apparatus and methods for obtaining chocolate coatings having a laced appearance, as well as confectionery or ice cream products having a coating formed thereon from two layers of chocolate, whereby the second layer adheres satisfactorily to the first layer.

### SUMMARY OF THE INVENTION

The present invention is directed to an apparatus for applying stripes of liquid coating material on a confectionery comprising:
at least two spinning applicators for applying a stripe of coating material onto the confectionery as the confectionery moves past the spinning applicators in a production line;
at least one shield positioned adjacent to the spinning applicators which has an arcuate shape and partially surrounds the spinning applicators to assist in directing the stripe of coating material onto the confectionery;
at least one manifold to provide the spinning applicators with the coating material in a liquid form and
wherein the shields are configured, positioned, or dimensioned to prevent coating material from one applicator to spray onto a second applicator.

The shield may have an arcuate shape and partially surrounds the spinning applicator and one shield may be larger than the other. The apparatus may have at least two shields which are positioned about each spinning applicator to form an aperture which directs the coating material onto the confectionery. The coating is applied to the confectionery at an angle of between 0° to 45° relative to a line perpendicularly drawn to the direction of travel of the confectionery in the production line, preferably, the coating is applied to the confectionery at an angle of between 15° to 35°.

The shield has at least one edge with a channel having either a U or V shape for collecting excess coating material. The channel has at least two inner edges diverging at an angle of between 30° to 60°. The shields can be made of stainless steel, plastic, or aluminum.

The spinning applicator can be a disk, a cup, a pipe, a nozzle, or a combination thereof. The spinning applicator can spin at a rate of between 50 rpm to 2500 rpm, and be a disk which is elliptical in shape. The disk may be inclined from the horizontal from between 5° to 35°.

In one embodiment of the apparatus two spinning applicators are mounted on opposite sides of the production line facing front and rear faces of the confectionery. Optionally, the confectioneries are moved in multiple directions to apply a laced coating. The apparatus may further comprise a jacketed tank for collecting coating material that is not applied upon the confectionery. The jacketed tank can be heated to a temperature of between 35°C to 45°C.

In one embodiment, the apparatus may have between 2 to 24 applicators are utilized in a two row array of between 2 and 12 spaced and offset applicators, with each applicator having shields to prevent liquid coating material from one applicator to contaminate an adjacent applicator, and so that a plurality of confectioneries can be coated simultaneously. The shields are configured, positioned, or dimensioned to prevent coating material from one applicator to spray onto a second applicator.

The present invention is also directed to a method for preparing a confectionery having a coating with stripes comprising supplying liquid coating material to at least two rotatable applicators, rotating the applicators to generate stripes of liquid coating material, and shielding the applicators as the confectionery moves along a production line to assist in directing the stripes of coating material onto the confectionery. The method may also include applying a layer of at least one chocolate onto the confectionery before or after the application of stripes by dipping or enrobing the confectionery with chocolate or by spraying chocolate onto the confectionery and wherein the chocolate is one of milk chocolate, dark chocolate, white chocolate, or combinations thereof, and optionally where the chocolate is partially substituted with a lesser fat component. The confectionery can be at least one frozen dessert, ice cream, baked product, praline, cake, fondant, water ice, sherbet, wafer cone, ice cream sandwich component, or cookie, and stripes are applied to the confectionery at an angle of between 0° to 45° relative to a line perpendicularly drawn to the direction of travel of the confectionery. The stripes are applied at essentially the same size and with a uniform spacing between them and are applied upon the confection when the confection is in a vertical position, some of the stripes are of a color or coating material that is different from the others.

The stripes are applied in the form of a crisscrossed pattern. The crisscrossed pattern comprises at least two different chocolates were at least one chocolate is milk chocolate, dark chocolate, white chocolate, or combinations thereof, optionally where the chocolate is partially substituted with a lesser fat component.

The method may also include collecting and re-using liquid coating material that is dispensed but not applied upon the confectionery.

### BRIEF DESCRIPTION OF THE DRAWINGS

Fig. 1, illustrates a top view simplified layout of one embodiment of a shield.
Fig. 2, illustrates a top view of a simplified layout of a shield.
Fig. 3, illustrates a top view array of a two row spinning applicator apparatus with shields.

### DETAILED DESCRIPTION OF THE INVENTION

The present invention advantageously provides a method for making and an apparatus for applying a chocolate coating to a confectionery to produce a confectionery with a laced appearing coating. The laced appearing coating preferably includes more than one type of chocolate, preferably two types of chocolate. Advantageously, the laced appearing coating is formed from two layers of chocolate, a foundation chocolate layer and a laced chocolate layer, thus giving the laced appearing chocolate coating a three dimensional texture.

The present invention provides several advantages including a rapid, efficient, and systematic process for making repeatable coating patterns on individual or multiple confectioneries. Another advantage of the process for making a confectionery with a laced appearing coating is the ease of making uniform crisscross line patterns which are generally symmetrical. Yet another advantage of the present invention, is the ability to create a three dimensional layered laced appearing coating on a confectionery.

The invention is directed to the process and apparatus for making laced appearing coatings on confectioneries. The laced appearing coatings comprise a chocolate foundation layer and a laced appearing layer.

As used herein, the term "foundation layer" means a first layer covering the confectionery. As used herein, the term "laced" means a repeating symmetrical or geometric pattern of lines spaced at uniform intervals resulting in a pin-striping effect or the like. The design of the apparatus described herein will primarily dictate the type of laced appearance on the confectionery or confectionery product being coated.

As used herein, the term "confectionery" include frozen desserts, ice cream novelties, baked products, and similar confectionery products which may conventionally be coated with chocolate, e.g., praline, cake, fondant, water ice, sherbet, or other filling, also associated food products such as but not limited to wafer cones, ice cream sandwich components, cookies, and other similar comestibles.

As used herein, the term "spinning applicator" means an object capable of rotating while providing a continuous or discontinuous stream of chocolate.

The chocolate foundation layer may be prepared from one or more types of chocolate. Preferably, the foundation layer is formed from different chocolates and chocolates of different colors. The foundation layer can have two chocolate layers having different textures or appearances, *e.g*., plain chocolate, milk chocolate, or white chocolate. Coatings in which one layer includes either milk or plain chocolate and the other layer includes white chocolate are the most interesting visually because there may be a marked contrast between the darker colored, milk, or plain chocolate, and the white chocolate.

Each foundation layer of chocolate has a thickness between 0.1 mm to 2 mm, preferably between 0.25 mm to 1.5 mm, and more preferably between 0.5 mm to about mm.

The chocolate may be ordinary chocolate according to accepted regulations or it may be a fat containing confectionery compound material containing sugar, milk derived components, and fat and solids from vegetable or cocoa sources in differing proportions having a moisture content less than 10 percent, preferably less than 5 percent by weight. The fat-containing material may be a chocolate substitute containing direct cocoa butter replacements, stearines, coconut oil, palm oil, butter, or any mixture thereof, nut pastes such as peanut butter and fat; praline; confectioner's coatings used for covering cakes usually comprising chocolate analogues with cocoa butter replaced by a cheaper non-tempering fat; or CARAMAC, a mixture of non-cocoa butter fats, sugar, and milk sold by Nestlé.

The lace appearing layer may have a symmetrical or geometric pattern of crisscross lines spaced at uniform intervals resulting in a pin-striping effect. The pattern includes generally vertical lines crossed by generally horizontal lines, generally angled lines crossed by a second set of generally angled lines, or a set of lines crossed by a second set of lines forming a continuous series of parallelograms. Additionally, the surface can be distorted to provide a less linear laced effect, a roughly continuous or roughly discontinuous pin-stripe effect. Although each of these are desired arrangements of the chocolate coating according to the invention, it should be understood that any design incorporating these or other similar arrangements may be provided to the chocolate coating.

The process of the present invention includes preparing a chocolate coating having a laced appearance which comprises applying a chocolate foundation layer, if desired modifying the surface, applying a lace appearing coating, and solidifying the chocolate.

The foundation layer is applied to a confectionery by any method know in the art. The foundation layer can be applied by dipping, enrobing, or spraying a chocolate coating onto the confectionery. The chocolate coating may include one or more types of chocolates or mixtures thereof which are applied simultaneously. Optionally, the surface of the foundation layer can be altered by any means known in the art to alter surface texture.

Subsequently, the confectionery is a passed through a series of spinning applicators that lay strings or droplets of at least one type of chocolate coating onto the confectionery. Preferably, the first chocolate advantageously differs from the second chocolate, e.g., one chocolate is plain or milk and the other is white. Various ratios of the two chocolate layers may be used to achieve different effects.

A typical sequence for applying a laced appearing layer comprises passing at least one confectionery by a series of spinning applicators in an up and down motion. The time between each up and down motion should be between 0.25 s to 2 s, preferably between 0.75 s to 1.5 s, more preferably for about 1 s.

In one embodiment of the present invention, a confectionery product with a chocolate coating having the appearance of either stripes or spots may be obtained by applying a first chocolate to the confectionery product by enrobing, spraying or dipping to coat the confectionery product with a first layer of chocolate, and then passing the confectionery product between the opposing faces of a pair of spinning applicators from which are projected streams of a second chocolate by centrifugal force onto the coated confectionery product, and then solidifying the coating. The second chocolate may be applied onto the spinning applicators by pumping the chocolate through tubing, e.g., stainless steel tubing.

The laced appearing coating may also be applied to a confectionery in the apparatus in various ways, for example by spraying or pouring the coating from the disks or cups onto the product, by dipping the product into the coating stream, or by passing the product through the apparatus, such as on a conveyor belt. Extruded stick products and cake products are particularly suitable for passing through the apparatus. The relative motions of the apparatus and the product to be coated may be altered by one of ordinary skill in the art to help obtain the desired pattern on the coated product. Different embodiments of the apparatus, such as using cups or pipes in place of the disks, are possible.

In all the above processes for preparing a confectionery or ice cream product with a chocolate coating having a laced appearance, the chocolate used may be tempered or untempered chocolate, is liquid, and the melting temperature may be from between 28°C to 60°C, preferably from between 35°C to 45°C.

The apparatus of the present invention comprises a series of spinning applicators, a manifold, and linkage which are combined into one element. The apparatus is compact and simple which permits the apparatus to be incorporated into existing equipment with great flexibility. The apparatus is easily placed into a moving individual, group, or row of confectioneries, thus, eliminating the need to reconfigure existing product machinery.

Spinning applicators include cups, discs, tubes, or any device known in the art to apply chocolate by centrifugal force. The cups, discs, or tubes apply a continuous chocolate stream by means of a pump. A shield interruption can create a discontinuous stream of chocolate. The spinning applicators may be made of one or more materials that may safely contact edible products, but are preferably metal to provide durability, and more preferably stainless steel. When the spinning applicator is a disk, the disks may be substantially circular or elliptical and may be of various sizes. It is possible for one disk to have a different shape or size than the other disk of the pair. Preferably the disk is elliptical in shape and the flat surface may advantageously be inclined from the horizontal, *e.g.*, up to 45° and preferably from between 5° to 35°. Advantageously, the inclination is arranged such that the edges of the disks downstream of the direction of conveyance of the confectionery product are closer than the edges of the disks upstream of the direction of conveyance of the confectionery product. The spinning applicators may be operated by a pump generating a pressure of from, e.g., between 50x6.9x10³ Pa (50 psi) to 150x6.9x10³ Pa (150 psi), and preferably from between 75x6.9x10³ Pa (75 psi) to 125x6.9x10³ Pa (125 psi).

The spinning applicators are preferably mounted facing the front and rear center of the confectionery. Each confectionery may be passed, for example, vertically or horizontally between the spinning applicators. The spinning of the applicators may be achieved, for instance, by a variable drive motor for each applicator or one or more motors and a timing belt. Any suitable rotating means may be used for spinning the applicators. The design on the confectionery product may be arranged by altering the speed of the spinning applicators. The speed of the applicators is preferably at least 50 rpm and may be up to 2500 rpm or more, depending on the space constraints dictated by the machine on which the product is to be made. The speed of the spinning applicator which produces stripes or spots is a function of the distance between the spinning applicator and the product to be coated.

The spinning applicators may be mounted inside a jacketed tank heated above the melting point of the chocolate, preferably from between 35°C to 45°C, by circulating heated water. The tank may be made of any suitable material, such as a metal, and is preferably stainless steel. The heated jacket enables the excess chocolate that has been projected by centrifugal force from the spinning applicators, after coating the confectionery product with the second chocolate, to hit the inside of the tank in a liquid form and then exit the tank for recirculation. The manifold of the apparatus of the present invention includes any system capable of delivering fluid to the spinning applicators to form a laced appearing coating on a confectionery. A typical manifold is attached to the spinning applicators by tubing, wherein a fluid flows from a chamber or reservoir to the spinning applicator via gravity or by a pump. The manifold may contain two or more spinning applicators wherein each spinning applicator is place on an opposite side of the confectionery. In an alternative embodiment, the manifold may contain two or more spinning applicators, preferably twelve on each side of a row of confectioneries. Each Spinning applicator is separated from the neighboring spinning applicator by a shield. Each spinning applicator is surrounded by two shields, one to either side, each spinning applicator may share a shield with the adjacent spinning applicator. In this embodiment, a confectionery is placed in front of a spinning applicator by a dipping motion, wherein the confectionery is covered with a laced appearing coating from opposite sides. The advantage of this embodiment is that the shield prevents neighboring confectioneries from being covered with chocolate from a spinning applicator not placed in front of the confectionery.

The shields should be sufficiently long to prevent chocolate from one applicator to spray onto a second adjacent applicator. The shields can be of different sizes and shapes, *i.e.*, either bent, straight, or curved, and there may be more than one shield for each spinning applicator and each shield may be of a different size. The shields form an aperture wherefrom the chocolate material is applied to the confectionery at an angle of between 0° (head-on) to 45°, preferably between 15° to 35°, and more preferably about 25° relative to a line drawn perpendicularly from the surface of the confectionery. Preferably, two shields curve around a spinning applicator forming the aperture, each shield has a different size and the spinning applicator spins towards the longer shield. Each shield has a channel at the edge closest to the confectionery. The channel is substantially U or V shaped having a first inner edge substantially perpendicular to the shield and a second inner edge forming an angle with the first inner edge between 30° to 60°, the angle being preferably about 45°.

The shields can be made of any suitable material. Optionally the shields can be made of steel, aluminum, plastic, or combinations thereof. Preferably the shields are made of stainless steel 303 and 304. The linkage of the apparatus of the present invention is any system capable of holding the assembly of the spinning applicators and the manifold.

Referring to Figs. 1 and 2, embodiments of the shields of the present invention are shown wherein in Fig. 1 the shield **2** has a curved shape with an edge having a channel **10.** A shield has a back end **4** which is curved to fit around a spinning applicator and a front end **6** positioned closest to a confectionery. The front end **6** has a beveled edge **8** and a channel **10** wherein the channel is in the shape of a V or a U for collecting excess coating material. A second shield **12** may be used in conjunction with the longer shield **2.** The second shield has a short back end **14,** a front end **6** having a beveled edge **20,** and a channel **22** wherein the channel collects excess coating material. The channel **22** is in the shape of a V or a U, preferably wherein a first inner edge **16** is substantially perpendicular to the front end **6** and forming an angle between 30° to 60° with the a second inner edge **18.**

The spinning applicators and shields can be arranged in an array wherein about 24 applicators **24** are utilized in a two row array of **12** spaced and offset applicators. Figure 3. Each applicator can have shields **2** and **12** to prevent liquid coating material from one applicator to contaminate an adjacent applicator, and so that a plurality of confectioneries can be coated simultaneously. The shields are configured, positioned, or dimensioned to prevent coating material from one applicator to spray onto a second applicator.

Although preferred embodiments of the invention have been described in the foregoing description, it will be understood that the invention is not limited to the specific embodiments disclosed herein but is capable of numerous modifications by one of ordinary skill in the art. It should be understood that the materials used and the mechanical details may be slightly different or modified from the descriptions herein without departing from the methods and compositions disclosed and taught by the present invention as recited in the claims.

## Claims

1. An apparatus for applying stripes of liquid coating material on a confectionery comprising:
at least two spinning applicators (24) for applying a stripe of coating material onto the confectionery as the confectionery moves past the spinning applicators in a production line;
at least one shield (2, 12) positioned adjacent to the spinning applicators (24) which has an arcuate shape and partially surrounds the spinning applicators (24) to assist in directing the stripe of coating material onto the confectionery;
at least one manifold to provide at least one spinning applicators with the coating material in a liquid form and
wherein the shields (2, 12) are configured, positioned, or dimensioned to prevent coating material from one applicator to spray onto a second applicator.

2. The apparatus according to claim 1, having at least two shields (2, 12) which are positioned about each spinning applicator to form an aperture which directs the coating material onto the confectionery.

3. The apparatus according to claim 1, wherein the coating is applied to the confectionery at an angle of between 0° to 45° relative to a line perpendicularly drawn to the direction of travel of the confectionery in the production line.

4. The apparatus according to claim 3, wherein the coating is applied to the confectionery at an angle of between about 15° to 35°.

5. The apparatus according to claim 1, wherein the shield has at least one edge with a channel (10, 22) having either a U or V shape for collecting excess coating material.

6. The apparatus according to claim 5, wherein the channel has at least two inner edges diverging at an angle of between 30° to 60°.

7. The apparatus according to claim 2, wherein one shield (2) is larger than the other (12).

8. The apparatus according to claim 1, wherein the shields (2, 12) are made of stainless steel, plastic, or aluminum.

9. The apparatus according to claim 1, wherein the spinning applicators (24) are a disk, a cup, a pipe, a nozzle, or a combination thereof.

10. The apparatus according to claim 9, wherein the spinning applicators (24) is are spinning at a rate of between 50 rpm to 2500 rpm.

11. The apparatus according to claim 10, wherein the spinning applicators (24) are disks which are elliptical in shape.

12. The apparatus according to claim 11, wherein the disks are inclined from the horizontal from between 5° to 35°.

13. The apparatus according to claim 1, wherein two spinning applicators (24) are mounted on opposite sides of the production line facing front and rear faces of the confectionery.

14. The apparatus according to claim 1, further comprising a jacketed tank for collecting coating material that is not applied upon the confectionery.

15. The apparatus according to claim 14, wherein the jacketed tank is heated to a temperature of between 35°C to 45°C.

16. The apparatus according to claim 1, wherein between 2 to 24 applicators (24) are utilized in a two row array of between 2 and 12 spaced and offset applicators, with each applicator having shields (2, 12) to prevent liquid coating material from one applicator to contaminate an adjacent applicator, and so that a plurality of confectioneries can be coated simultaneously.

17. A method for preparing a confectionery having a coating with stripes which makes use of the apparatus as claimed in claim 1, which comprises supplying liquid coating material to at least two rotatable applicators (24); rotating the applicators to generate stripes of liquid coating material; and shielding (2, 12) the applicators as the confectionery moves along a production line to assist in directing the stripes of coating material onto the confectionery.

18. The method according to claim 17, which further comprises applying a layer of at least one chocolate onto the confectionery before the application of stripes by dipping or enrobing the confectionery with chocolate or by spraying chocolate onto the confectionery and wherein the chocolate is one of milk chocolate, dark chocolate, white chocolate, or combinations thereof, and optionally where the chocolate is partially substituted with a lesser fat component.

19. The method according to claim 17, wherein the confectionery is at least one frozen dessert, ice cream, baked product, praline, cake, fondant, water ice, sherbet, wafer cone, ice cream sandwich component, or cookie, and stripes are applied to the confectionery at an angle of between 0° to 45° relative to a line perpendicularly drawn to the direction of travel of the confectionery.

20. The method according to claim 17, wherein the stripes are applied at essentially the same size and with a uniform spacing between them and are applied upon the confection when the confection is in a vertical position.

21. The method according to claim 17, wherein at least some of the stripes are of a color or coating material that is different from the others.

22. The method according to claim 17, which further comprises collecting and re-using liquid coating material that is dispensed but not applied upon the confectionery.

23. The method according to claim 17, wherein the stripes are applied in the form of a crisscrossed pattern.

24. The method according to claim 23, wherein the crisscrossed pattern comprises at least two different chocolates were at least one chocolate is milk chocolate, dark chocolate, white chocolate, or combinations thereof, optionally where the chocolate is partially substituted with a lesser fat component.

## Patentansprüche

1. Eine Vorrichtung zum Applizieren von Streifen flüssigen Beschichtungs-Materials auf ein Konfekt-Produkt, umfassend:
zumindest zwei rotierende Applikatoren (24) zum Applizieren eines Streifens Beschichtungsmaterials auf das/dem Konfekt-Produkt, während das Konfekt-Produkt sich auf einer/einem Fertigungslinie/Fließband entlang der rotierenden Applikatoren bewegt;
zumindest ein benachbart zu den rotierenden Applikatoren (24) positionierter Schirm (2, 12), welcher eine bogenförmige Form aufweist, und die rotierenden Applikatoren (24) teilweise umgibt, um das/ein (Aus)richten des Beschichtungsmaterial-Streifens auf das/dem Konfekt-Produkt zu unterstützen;
zumindest einen Verteiler zum Versorgen zumindest eines rotierenden Applikators mit dem Beschichtungsmaterial in flüssiger Form, und
wobei die Schirme (2, 12) derart konfiguriert, positioniert und dimensioniert sind, dass sie verhindern, dass Beschichtungsmaterial von einem Applikator auf einen zweiten Applikator sprüht.

2. Vorrichtung gemäß Anspruch 1, welche zumindest zwei Schirme (2, 12) aufweist, welche um jeden rotierenden Applikator herum angeordnet sind, um eine Öffnung zu bilden, welche das Beschichtungsmaterial auf das/dem Konfekt-Produkt richtet.

3. Vorrichtung gemäß Anspruch 1, wobei die Beschichtung auf das/dem Konfekt-Produkt unter einem Winkel von zwischen 0° bis 45° relativ zu einer Linie appliziert wird, welche senkrecht zu der Bewegungs-Richtung des Konfekt-Produktes auf der/dem Fertigungslinie/Fließband gezogen ist.

4. Vorrichtung gemäß Anspruch 3, wobei die Beschichtung auf das/dem Konfekt-Produkt mit einem Winkel von zwischen 15° und 35° appliziert wird/ist.

5. Vorrichtung gemäß Anspruch 1, wobei der Schirm zumindest eine Kante mit einem Kanal (10, 22) aufweist, welcher entweder eine U-Form oder eine V-Form aufweist, um überschüssiges Beschichtungsmaterial zu sammeln.

6. Vorrichtung gemäß Anspruch 5, wobei der Kanal zumindest zwei Innenkanten aufweist, welche unter einem Winkel von zwischen 30° und 60° divergieren.

7. Vorrichtung gemäß Anspruch 2, wobei ein Schirm (2) größer ist als der andere (12).

8. Vorrichtung gemäß Anspruch 1, wobei die Schirme (2, 12) aus rostfreiem Stahl, Plastik oder Aluminium hergestellt sind.

9. Vorrichtung gemäß Anspruch 1, wobei die rotierenden Applikatoren (24) eine Scheibe, ein Becher, ein Rohr, eine Düse oder eine Kombination davon sind.

10. Vorrichtung gemäß Anspruch 9, wobei die rotierenden Applikatoren (24) mit einer Rate von zwischen 50 UpM bis 2500 UpM rotieren.

11. Vorrichtung gemäß Anspruch 10, wobei die rotierenden Applikatoren (24) Scheiben sind, welche von elliptischer Form sind.

12. Vorrichtung gemäß Anspruch 11, wobei die Scheiben aus der Horizontalen um zwischen 5° und 35° geneigt sind.

13. Vorrichtung gemäß Anspruch 1, wobei zwei rotierende Applikatoren (24) an gegenüberliegenden/entgegengesetzten Seiten der/des Fertigungslinie/Fließbandes montiert sind, welche einer Vorderseite und einer Hinterseite des Konfekt-Produktes zugewandt sind.

14. Vorrichtung gemäß Anspruch 1, ferner einen ummantelten Tank zum Sammeln von nicht auf das/dem Konfekt-Produkt applizierten Beschichtungsmaterials umfassend.

15. Vorrichtung gemäß Anspruch 14, wobei der ummantelte Tank auf eine Temperatur von zwischen 35°C bis 45°C erwärmt wird/ist.

16. Vorrichtung gemäß Anspruch 1, wobei zwischen 2 bis 24 Applikatoren (24) in einer zweireihigen Anordnung von zwischen 2 und 12 beabstandeten und versetzten Applikatoren verwendet werden, wobei jeder Applikator Schirme (2, 12) aufweist, um zu verhindern, dass flüssiges Beschichtungsmaterial von einem Applikator einen benachbarten Applikator kontaminiert, und so, dass eine Mehrzahl von Konfekt-Produkten simultan beschichtet werden können.

17. Verfahren zum Präparieren/Herstellen eines eine Beschichtung mit Streifen aufweisenden Konfekt-Produktes, welches die Vorrichtung gemäß Anspruch 1 verwendet, welches umfasst: Zuführen flüssigen Beschichtungs-Materials zu zumindest zwei drehbaren Applikatoren (24); Drehen der Applikatoren zum Erzeugen von Streifen flüssigen Beschichtungs-Materials; und Abschirmen (2, 12) der Applikatoren, während das Konfekt-Produkt sich entlang einer/einem Fertigungslinie/Fließband bewegt, um ein Ausrichten der Beschichtungs-Material-Streifen auf das/dem Konfekt-Produkt zu fördern.

18. Verfahren gemäß Anspruch 17, welches ferner Applizieren einer Schicht von zumindest einer Schokolade auf das/dem Konfekt-Produkt vor dem Applizieren von Streifen mittels Eintauchen oder Umhüllen des Konfekt-Produktes mit Schokolade, oder mittels Sprühens von Schokolade auf das Konfekt umfasst, und wobei die Schokolade eine von Milch-Schokolade, dunkler Schokolade, weißer Schokolade oder eine Kombination hiervon ist; und wobei optional die Schokolade teilweise mit einer weniger fetten Komponente substituiert ist/wird.

19. Verfahren gemäß Anspruch 17, wobei das Konfekt-Produkt zumindest ein gefrorenes Dessert, eine Eiscreme, ein gebackenes Produkt, eine Praline, ein Kuchen, ein Fondant, ein Wassereis, ein Sherbet, ein Waffelkegel, eine Eiscreme-Sandwich-Komponente oder ein Keks ist, und Streifen auf das/dem Konfekt-Produkt unter einem Winkel von zwischen 0° bis 45° relativ zu einer Linie appliziert werden, welche senkrecht zu der Bewegungs-Richtung des Konfektes gezogen ist.

20. Verfahren gemäß Anspruch 17, wobei die Streifen mit im Wesentlichen der gleichen Größe und mit einem einheitlichen Zwischenraum zwischen ihnen appliziert werden, und auf das Konfekt-Produkt appliziert werden, wenn das Konfekt-Produkt sich in einer Vertikal-Position befindet.

21. Verfahren gemäß Anspruch 17, wobei zumindest einige der Streifen von einer Farbe oder aus einem Beschichtungsmaterial sind, welche(s) von den anderen abweicht.

22. Verfahren gemäß Anspruch 17, welches ferner Sammeln und Wiederverwenden flüssigen Beschichtungsmaterials umfasst, welches dispensiert, aber nicht auf das Konfekt-Produkt appliziert wurde.

23. Verfahren gemäß Anspruch 17, wobei die Streifen in Form eines Kreuzmusters appliziert werden/sind.

24. Verfahren gemäß Anspruch 23, wobei das Kreuzmuster zumindest zwei verschiedene Schokoladen umfasst, wobei zumindest eine Schokolade Milch-Schokolade, dunkle Schokolade, weiße Schokolade oder eine Kombination davon ist, und wobei optional die Schokolade teilweise mit einer weniger fetten Komponente substituiert ist/wird.

## Revendications

1. Appareil pour appliquer des rayures de matériau de nappage liquide sur une confiserie comprenant :
au moins deux applicateurs pivotants (24) pour appliquer une rayure de matériau de nappage sur la confiserie pendant que la confiserie se déplace devant les applicateurs pivotants dans une ligne de production ;
au moins un bouclier (2, 12) positionné de manière adjacente par rapport aux applicateurs pivotants (24) qui a une forme arquée et qui entoure partiellement les applicateurs pivotants (24) pour aider à orienter la rayure de matériau de nappage sur la confiserie ;
au moins un collecteur pour fournir le matériau de nappage sous une forme liquide à au moins un applicateur pivotant et
dans lequel les boucliers (2, 12) ont une configuration, une position ou une dimension destinée à empêcher le matériau de nappage venant d'un applicateur d'asperger un deuxième applicateur.

2. Appareil selon la revendication 1, ayant au moins deux boucliers (2, 12) qui sont positionnés autour de chaque applicateur pivotant pour former une ouverture qui oriente le matériau de nappage sur la confiserie.

3. Appareil selon la revendication 1, dans lequel le nappage est appliqué à la confiserie selon un angle compris entre 0° et 45° par rapport à une ligne tracée perpendiculairement à la direction dans laquelle la confiserie se déplace dans la ligne de production.

4. Appareil selon la revendication 3, dans lequel le nappage est appliqué à la confiserie selon un angle compris entre 15° et 35°.

5. Appareil selon la revendication 1, dans lequel le bouclier a au moins une bordure avec une rainure (10, 22) ayant une forme en U ou une forme en V pour récolter l'excès de matériau de nappage.

6. Appareil selon la revendication 5, dans lequel la rainure a au moins deux bordures intérieures qui s'écartent selon un angle compris entre 30° et 60°.

7. Appareil selon la revendication 2, dans lequel un bouclier (2) est plus grand que l'autre (12).

8. Appareil selon la revendication 1, dans lequel les boucliers (2, 12) sont en acier inoxydable, en plastique ou en aluminium.

9. Appareil selon la revendication 1, dans lequel les applicateurs pivotants (24) sont un disque, une coupe, un tuyau, un bec ou une combinaison de ceux-ci.

10. Appareil selon la revendication 9, dans lequel les applicateurs pivotants (24) pivotent à un rythme compris entre 50 tours par minute et 2 500 tours par minute.

11. Appareil selon la revendication 10, dans lequel les applicateurs pivotants (24) sont des disques qui ont la forme d'une ellipse.

12. Appareil selon la revendication 11, dans lequel les disques sont inclinés par rapport à l'horizontale selon un angle compris entre 5° et 35°.

13. Appareil selon la revendication 1, dans lequel deux applicateurs pivotants (24) sont montés sur des côtés opposés de la ligne de production faisant face aux faces avant et arrière de la confiserie.

14. Appareil selon la revendication 1, comprenant en outre une cuve à double paroi pour récolter le matériau de nappage qui n'est pas appliqué sur la confiserie.

15. Appareil selon la revendication 14, dans lequel la cuve à double paroi est chauffée à une température comprise entre 35 °C et 45 °C.

16. Appareil selon la revendication 1, dans lequel entre 2 et 24 applicateurs (24) sont utilisés dans une batterie à deux rangs comptant entre 2 et 12 applicateurs espacés et décalés, chaque applicateur ayant des boucliers (2, 12) pour empêcher le matériau de nappage liquide venant d'un applicateur de contaminer un applicateur voisin, et de manière à ce qu'une pluralité de confiseries puissent être nappées simultanément.

17. Procédé pour préparer une confiserie ayant un nappage avec des rayures qui fait usage de l'appareil selon la revendication 1, qui comprend la fourniture de matériau de nappage liquide à au moins deux applicateurs rotatifs (24) ; la mise en rotation des applicateurs pour produire des rayures de matériau de nappage liquide ; et la protection (2, 12) des applicateurs pendant que la confiserie se déplace le long d'une ligne de production pour aider à orienter les rayures de matériau de nappage sur la confiserie.

18. Procédé selon la revendication 17, qui comprend en outre l'application d'une couche d'au moins un chocolat sur la confiserie avant l'application de rayures en trempant ou en enrobant la confiserie avec le chocolat ou en projetant le chocolat sur la confiserie et dans lequel le chocolat est un chocolat au lait, un chocolat noir, un chocolat blanc ou des combinaisons de ceux-ci, et facultativement où le chocolat est remplacé partiellement par un constituant moins gras.

19. Procédé selon la revendication 17, dans lequel la confiserie est au moins un dessert glacé, une crème glacée, un produit de boulangerie ou de pâtisserie, une praline, un gâteau, un fondant, une glace à l'eau, un sorbet, un cornet, un constituant de sandwich à la crème glacée ou un biscuit, et les rayures sont appliquées à la confiserie selon un angle compris entre 0° et 45° par rapport à une ligne tracée perpendiculairement à la direction dans laquelle la confiserie se déplace.

20. Procédé selon la revendication 17, dans lequel les rayures sont appliquées essentiellement avec la même taille et un espacement identique entre elles et sont appliquées sur la confiserie lorsque la confiserie est dans une position verticale.

21. Procédé selon la revendication 17, dans lequel au moins quelques-unes des rayures sont faites d'une couleur ou d'un matériau de nappage différent des autres.

22. Procédé selon la revendication 17, qui comprend en outre la récolte et la réutilisation du matériau de nappage liquide qui est délivré mais pas appliqué sur la confiserie.

23. Procédé selon la revendication 17, dans lequel les rayures sont appliquées sous la forme d'un motif entrecroisé.

24. Procédé selon la revendication 23, dans lequel le motif entrecroisé comprend au moins deux chocolats différents où au moins un chocolat est un chocolat au lait, un chocolat noir, un chocolat blanc ou des combinaisons de ceux-ci, facultativement où le chocolat est remplacé partiellement par un constituant moins gras.
